# EUROPEAN PATENT APPLICATION

(11) **EP 4 468 020 A1**
(43) Date of publication of application: **27.11.2024**
(21) Application number: 24156593.6
(22) Date of filing: 08.02.2024
(51) Int. Cl.: G01S 5/16, G05D 1/221, G05D 1/249, G06T 7/73, G05D 1/225, G05D 1/646

(54) **AZIMUTH ANGLE ACQUISITION APPARATUS, AZIMUTH ANGLE ACQUISITION SYSTEM, AND AZIMUTH ANGLE ACQUISITION METHOD FOR SELF-PROPELLED VEHICLE**

(30) Priority: 22.05.2023 JP 2023083792
(71) Applicant: TOYOTA JIDOSHA KABUSHIKI KAISHA, Toyota-shi, Aichi-ken, 471-8571 (JP)
(72) Inventor: KANOU, Takeshi, Toyota-shi, 471-8571 (JP); SAWANO, Takuro, Toyota-shi, 471-8571 (JP); YASUYAMA, Shogo, Toyota-shi, 471-8571 (JP); IWAHORI, Kento, Toyota-shi, 471-8571 (JP); IKEDA, Keigo, Toyota-shi, 471-8571 (JP)
(74) Representative: J A Kemp LLP

(57) **Abstract**

An azimuth angle acquisition apparatus for a self-propellable vehicle is provided. The azimuth angle acquisition apparatus includes an acquirer configured to acquire an external state that is a motion state of the vehicle detected from the external world and an internal state that is the motion state of the vehicle detected from the internal world, an azimuth angle calculator configured to acquire an external azimuth angle using the acquired external state and calculates an internal azimuth angle using the acquired internal state, and an azimuth angle determinator configured to determine a vehicle azimuth angle using the calculated external azimuth angle and the internal azimuth angle. The vehicle azimuth angle is used to self-propel the vehicle.

## Description

### CROSS REFFERENCE TO OTHER APPLICATION

This application claims priority to Japanese Patent Application No. 2023-083792, filed May 22, 2023, which is incorporated herein by reference for all purposes.

### TECHNICAL FIELD

The present disclosure relates to a technique for acquiring an azimuth angle of a self-propelled vehicle.

### BACKGROUND OF THE DISCLOSURE

A technique for causing a vehicle to travel by autonomous control or remote control in a vehicle manufacturing system has been proposed.

In a self-propelled vehicle running by autonomous control or remote control, running control of the vehicle is performed using position coordinates and an azimuth angle of the vehicle. However, there is a problem that the azimuth angle cannot be acquired with a desired acquisition accuracy. When the accuracy of obtaining the azimuth angle is low, the self-propelled vehicle cannot travel along a desired route.

Therefore, there is a need to improve the accuracy of obtaining the azimuth angle of the self-propelled vehicle.

### SUMMARY

The present disclosure may be implemented as the following aspects.

A first aspect provides an azimuth angle acquisition apparatus for a self-propellable vehicle. The azimuth angle acquisition apparatus according to a first aspect includes an acquirer configured to acquire an external state and an internal state. The external state is a motion state of the vehicle detected from the external world and the internal state is the motion state of the vehicle detected from the internal world, an azimuth angle calculator configured to acquires an external azimuth angle using the acquired external state and calculates an internal azimuth angle using the acquired internal state, and an azimuth angle determinator configured to determine a vehicle azimuth angle using the calculated external azimuth angle and the internal azimuth angle, the vehicle azimuth angle is used to self-propel the vehicle.

According to the azimuth angle acquisition apparatus of the first aspect, it is possible to improve the accuracy of acquisition of the azimuth angle of the self-propelled vehicle.

In the azimuth angle acquisition apparatus according to the first aspect, the azimuth angle determinator may determine the vehicle azimuth angle by changing a priority level of the external azimuth angle and the internal azimuth angle in accordance with the motion state of the vehicle and a state of the external state detector that detects the external state. In this case, it is possible to further improve the accuracy of acquiring the azimuth angle of the self-propelled vehicle in accordance with the motion state of the vehicle and the state of the external state detector.

In the azimuth angle acquisition apparatus according to the first embodiment, the azimuth angle determinator may increase the priority level of the external azimuth angle and determine the vehicle azimuth angle when the motion state of the vehicle is in the stopped state. In this case, by using the external azimuth angle, it is possible to further improve the accuracy of obtaining the azimuth angle of the self-propelled vehicle.

In the azimuth angle acquisition apparatus according to the first aspect, the azimuth angle determinator may increase a priority level of the internal azimuth angle and determine the vehicle azimuth angle when the motion state of the vehicle is in a turning state. In this case, it is possible to further improve the accuracy of acquiring the azimuth angle of the self-propelled vehicle by using the internal azimuth angle.

In the azimuth angle acquisition apparatus according to the first aspect, the azimuth angle determinator may correct the internal azimuth angle using the external azimuth angle when the motion state of the vehicle is in a straight-ahead state and the probability of the external state detector is equal to or greater than a predetermined threshold value, and may increase the priority level of the internal azimuth angle and determine the vehicle azimuth angle when the probability of the external state detector is less than the predetermined threshold value. In this case, it is possible to further improve the accuracy of obtaining the azimuth angle of the self-propelled vehicle by correcting the internal azimuth angle using the external azimuth angle in accordance with the probability of the external state detector.

In the azimuth angle acquisition apparatus according to the first aspect, the external state detector may be an imaging device disposed in an external world of the vehicle, and the azimuth angle calculator may calculate an external azimuth angle of the vehicle using an image captured by the imaging device. In this case, since the external azimuth angle can be directly calculated using the image, it is possible to further improve the accuracy of acquiring the azimuth angle of the self-propelled vehicle.

In the azimuth angle acquisition apparatus according to the first aspect, the internal state is detected by an internal state detector, the internal state detector may be a yaw rate sensor provided in the vehicle, and the azimuth angle calculator may calculate the internal azimuth angle of the vehicle using the yaw rate acquired by the yaw rate sensor. In this case, since the internal azimuth angle can be calculated by directly detecting the behavior of the vehicle, it is possible to further improve the accuracy of acquiring the azimuth angle of the self-propelled vehicle.

A second aspect provides an azimuth angle acquisition system for a self-propellable vehicle. The azimuth angle acquisition system according to a second aspect includes an external state detector disposed in an external world of the vehicle to detect a motion state of the vehicle from the external world, and an internal state detector mounted on the vehicle to detect the motion state of the vehicle from an internal world, an azimuth angle acquisition apparatus. The azimuth angle acquisition apparatus includes an azimuth angle calculator configured to calculate an external azimuth angle using an external state of the vehicle and an internal azimuth angle using an internal state of the vehicle, the external state is the motion state of the vehicle detected by the external state detector, and the internal state is the motion state of the vehicle detected by the internal state detector; and an azimuth angle determinator configured to determine a vehicle azimuth angle with using the calculated external azimuth angle and the internal azimuth angle, the vehicle azimuth angle is used to self-propel the vehicle.

According to the azimuth angle acquisition system of the second aspect, it is possible to improve the accuracy of acquiring the azimuth angle of the self-propelled vehicle. Further, the azimuth angle acquisition system according to the second aspect can be realized by various aspects in the same manner as the azimuth angle acquisition apparatus according to the first aspect.

A third aspect provides a method of acquiring an azimuth angle of a self-propellable vehicle. The azimuth angle acquisition method according to a third aspect includes acquiring an external state and an internal state, the external state is a motion state of the vehicle detected from an external world and the internal state is the motion state of the vehicle detected from an internal world, calculating an external azimuth angle using the acquired external state, and an internal azimuth angle using the acquired internal state, and determining a vehicle azimuth angle using the calculated external azimuth angle and the internal azimuth angle, the vehicle azimuth angle is used to self-propel the vehicle.

According to the azimuth angle acquisition method of the third aspect, it is possible to improve the acquisition accuracy of the azimuth angle of the self-propelled vehicle. Further the azimuth angle acquisition method according to the third aspect can be realized by various aspects in the same manner as the azimuth angle acquisition apparatus according to the first aspect. The azimuth angle acquisition method according to the third aspect can also be realized as an azimuth angle acquisition program or a computer-readable recording medium storing the program. It should be noted that the determination of the vehicle azimuth angle in the first to third aspects may be performed using an AI, i.e., a learning model.

### BRIEF DESCRIPTION OF THE DRAWINGS

Various embodiments of the invention are disclosed in the following detailed description and the accompanying drawings.
Fig. 1 is an explanatory diagram illustrating a schematic configuration of a vehicle azimuth angle acquisition system according to a first embodiment,
Fig. 2 is a block diagram illustrating an example of an internal configuration of a vehicle azimuth angle acquisition apparatus according to the first embodiment,
Fig. 3 is a block diagram illustrating an example of an internal configuration of a vehicle according to the first embodiment,
Fig. 4 is a flowchart illustrating a vehicle azimuth angle acquisition process flow executed by a vehicle azimuth angle acquisition apparatus according to the first embodiment,
Fig. 5 is an explanatory diagram illustrating an example of a running state of a vehicle,
Fig. 6 is an explanatory diagram illustrating relationship between a vehicle azimuth and a moving vector,
Fig. 7 is a flowchart illustrating an example of a remote control process flow for a vehicle,
Fig. 8 is a flowchart illustrating an example of an autonomous control process flow for a vehicle.

### DETAILED DESCRIPTION

An azimuth angle acquisition apparatus, an azimuth angle acquisition system, and an azimuth angle acquisition method of a self-propellable vehicle according to the present disclosure will be described below based on some embodiments.

### First Embodiment :

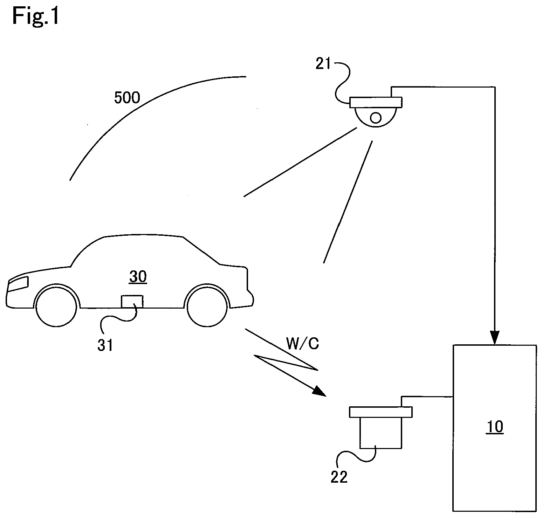

As illustrated in FIG. 1, a vehicle azimuth angle acquisition system 500 according to the first embodiment includes a vehicle azimuth angle acquisition apparatus 10, a self-propellable vehicle 30, an external state detector 21, and an internal state detector 31. The vehicle azimuth angle acquisition apparatus 10 is a so-called server computer and determines and acquires a vehicle azimuth angle that can be used as a parameter indicating the azimuth of the vehicle 30.

The vehicle azimuth angle acquisition apparatus 10 is connected to the external state detector 21 for detecting the external state of the vehicle 30 by wire or wirelessly. The vehicle azimuth angle acquisition apparatus 10 acquires the external state of the vehicle 30 via the external state detector 21. The external state of the vehicle is a motion state of the vehicle detected from the external world of the vehicle 30, that is, from the outside of the vehicle. The motion state of the vehicle means, for example, a driving state of the vehicle such that the vehicle is in a stop state, a running state, an acceleration state, a deceleration state, a straight-ahead state, or a turning state. The vehicle azimuth angle acquiring apparatus 10 is wired to an access point 22 for transmitting and receiving signals to and from the vehicle 30 by a radio communication W/C. Wireless communication is realized, for example, by wireless connectivity through a wireless local network (LAN) or a Bluetooth compliant with IEEE802.11 standard.

In the present embodiment, the self-propellable vehicle 30 includes a vehicle can be running by an autonomous control or a remote control. The vehicle 30 is a vehicle providing an internal combustion engine, a vehicle providing a motor, or a hybrid vehicle providing an internal combustion engine and a motor as a power source. The vehicle including the motor may include at least one of a secondary battery and a fuel cell as a power source. The vehicle 30 includes an internal state detector 31 for detecting an internal state of the vehicle 30. The vehicle azimuth angle acquisition apparatus 10 acquires an internal state detected by the internal state detector 31 and transmitted by wireless communication via the access point 22. The internal state of the vehicle is an internal world of the vehicle 30, that is, the motion state of the vehicle detected inside the vehicle. In the present embodiment, the vehicle may be a vehicle to run with a wheel or may be a vehicle to run with a continuous track, and may be a passenger car, a track, a bus, a two-wheel vehicle, a four-wheel vehicle, a construction vehicle, or a combat vehicle, for example. In the present embodiment, the vehicle means an object capable of moving, and can be called a "moving object." The moving object includes an electric vertical takeoff and landing aircraft (so-called flying-automobile), for example. When the term "moving object" is used, the expression of the term "vehicle" or "car" may be read as "moving object," and the term "run" may be read as "move."

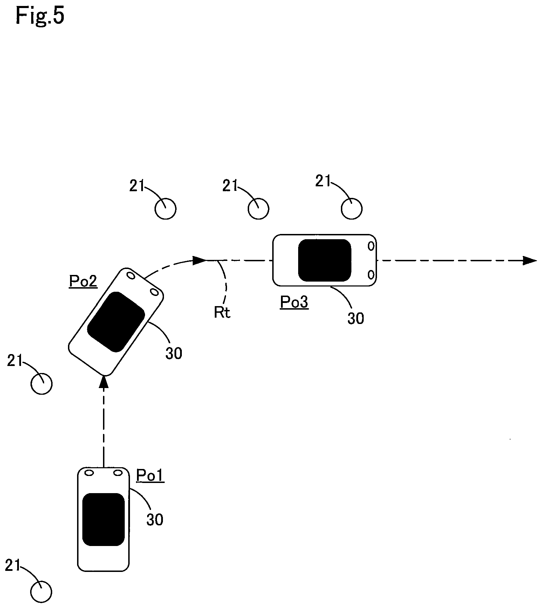

In the present embodiment, a plurality of the external state detectors 21 are arranged on a route on which the vehicle 30 self-travels (see FIG. 5). The external state 21 is, for example, at least one of a camera and a distance measuring device. Generally, a camera is an image pickup device including an image pickup element such as a CCD or an image pickup element array, and outputs external shape information or shape information of an object as still image data or moving image data by receiving visible light. Lidar (Light Detection And Ranging) as the measuring device generally emits infrared laser light and receives a reflected light reflected by the target by a light receiving device to measure the distance to the object. The reflected light reflected by the target is detected as a detection point group corresponding to the target. The external state detector 21 outputs the still image data or the moving image data, or the detection point cloud data as a parameter indicating the external state. In the present embodiment, as described above, the external state detector 21 may detect information for specifying the external shape of the vehicle 30 and output the information as information indicating the external state. As will be described later, the vehicle azimuth angle acquisition apparatus 10 determines the driving/motion state of the vehicle 30 using the information for specifying the external shape detected by the external state detector 21. The determination of the motion state of the vehicle 30 performed by the vehicle azimuth angle acquisition apparatus 10 may be performed by the external state detector 21. In this case, the external state detector 21 transmits information indicating the determined motion state to the vehicle azimuth angle acquisition apparatus 10. When a camera and a Lidar are used, the image data and the detected point cloud data may be fused by a fusion process and used as the fused data.

In the present embodiment, the internal state detector 31 is used to detect the azimuth angle of the vehicle 30 in the internal world of the vehicle. For example, a yaw rate sensor is used as the internal state detector 31. Hereinafter, the yaw rate sensor is mainly used as the internal state detector 31. The yaw rate sensor outputs a yaw rate as a parameter indicating an angular velocity around the vehicle yaw axis when the vehicle turns, that is, an internal state. The internal state detector 31 is mounted on the vehicle 30 and can directly detect the behavior of the vehicle 30, and a gyro sensor or a multi-axis acceleration sensor can be used as long as it is a sensor capable of detecting at least a turning state.

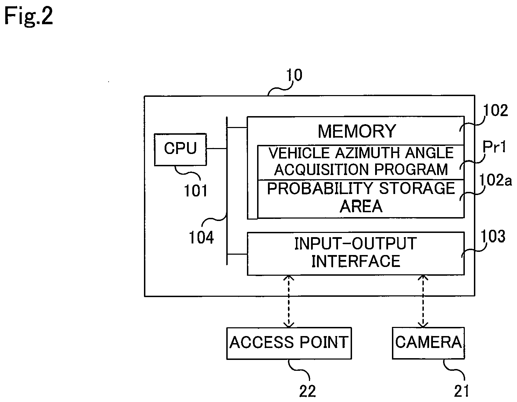

As illustrated in FIG. 2, the vehicle azimuth angle acquisition apparatus 10 includes a central processor (CPU)101, a memory 102 as a storage unit, an input/output interface 103 as an acquirer, and a clock generator (not illustrated). CPU101, the memories 102, the input/output interfaces 103, and the clock generator are connected in a bidirectional manner via an internal bus 104. The memory 102 includes a memory for storing the vehicular azimuth angle obtaining program Pr1 in a non-volatile and read-only manner, for example, a ROM, and a memory that can be read and written by CPU101, for example, a RAM. The vehicle azimuth angle acquisition program Pr1 is executed by CPU101 to calculate the external azimuth angle using the acquired external state, calculate the internal azimuth angle using the acquired internal state, and determine the vehicle azimuth angle used to self-propel the vehicle 30 using the external azimuth angle and the internal azimuth angle. The non-volatile and readable/writable area of the memory 102 includes a probability storage area 102a for storing the probability of the external state detector 21. CPU101, that is, the vehicle azimuth angle acquisition apparatus 10 functions as an azimuth angle acquirer and an azimuth angle determinator by expanding into a readable/writable memory and executing the vehicle azimuth angle acquisition program Pr1 stored in the memory 102. Note that CPU101 may be a single CPU, a plurality of CPU that execute respective programs, or a multi-task type or multi-thread type CPU that can execute a plurality of programs simultaneously. The vehicle azimuth angle acquisition apparatus 10 can function as a remote control apparatus that remotely controls the vehicle 30 by including a remote control program.

The camera 21 as an external state detector and the access point 22 are connected to the input/output interface 103 via signal lines, respectively. The input/output interface 103 transmits an imaging control signal for instructing an image processing of object detection to the camera 21, and the camera 21 transmits an imaging signal indicating a captured image as a detection result to the input/output interface 103. When the vehicle azimuth angle acquisition apparatus 10 functions also as a remote control apparatus, a travel control signal for causing the vehicle 30 to self-propel is transmitted from the input/output interface 103 to the access point 22. The travel control signal is, for example, a control signal transmitted to a travel control device 300 included in the vehicle 30, and is a control signal for instructing a required accelerator opening degree or a required torque value, a required braking amount, and a required steering angle. By the travel control device 300 controlling each actuator in accordance with the travel control signal, travel control including acceleration/deceleration and cruising in the vehicle 30, stop control of the vehicle 30, and turning control including right and left turns are realized. Vehicle information indicating the state of the vehicle is transmitted from the access point 22 to the input/output interface 103. The vehicle information includes, for example, running information indicating the motion state detected in the vehicle 30, such as a yaw rate, a steering angle, a speed, and an acceleration/deceleration speed, information such as whether the wiper is activated or not, and information such as whether the headlight is turned on or not. In addition, the input/output interface 103 may receive environmental information indicating environmental conditions of external world of the vehicle such as weather, temperature, and brightness. The environment information may be acquired by various detectors arranged on the route of the vehicle, or may be acquired through a network as information on an area including the route of the vehicle.

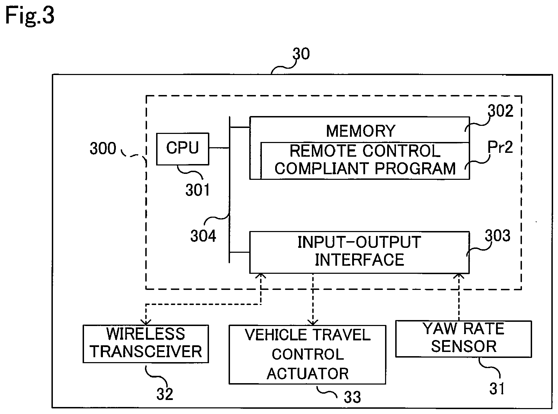

As illustrated in FIG. 3, the vehicle 30 includes a central processing unit (CPU)301, a memory 302 as a storage unit, an input/output interface 303, and the travel control device 300 including a clock generator (not illustrated). CPU301, the memories 302, the input/output interfaces 303, and the clock generators are connected in a bidirectional manner via an internal bus 304. The memory 302 includes a memory that stores a remote control compliant program Pr2 in a non-volatile and read-only manner, for example, a ROM, and a memory that can be read and written by a CPU301, for example, a RAM. The remote control compliant program Pr2 controls the running condition of the vehicle 30 in response to the running control signal received from the remote control apparatus.

The yaw rate sensor 31, the wireless transceiver 32, and the vehicle travel control actuator 33 are connected to the input/output interface 303 via signal lines. A yaw rate as a detection result is transmitted from the yaw rate sensor 31 to the input/output interface 303. A travelling information including the yaw rate received from the yaw rate sensor 31 and the vehicle information are transmitted from the input/output interface 303 to the wireless transceiver 32. The travel control signal is transmitted from the wireless transceiver 32 to the input/output interface 303. A control signal for instructing a required accelerator opening degree or a required torque value, a required braking amount, and a required steering angle is transmitted from the input/output interface 303 to the vehicle travel control actuator 33. The travel control device 300 includes a fuel injector in an internal combustion engine according to a required accelerator opening degree, a motor controller in a motor according to a required torque value, a brake pad actuator in a braking device according to a required braking amount, and a steering actuator that controls a turning angle of a steered wheel in a steering device according to a required steering angle. The brake actuator controls the hydraulic pressure by a motor to adjust the operation amount of the brake pad, that is, the braking amount/braking force. The steering actuator controls a pinion gear engaged with a rack gear coupled to the steering wheel by a motor to adjust a turning angle of the steering wheel. The wireless transceiver 32 may be detachable. The removable wireless transceiver 32, when mounted on the external communication connection port of the vehicle 30, may be required to include a configuration capable of transmitting the travel control signal to the vehicle travel control actuator 33 via the input-output interface 303 provided in the vehicle 30, That is, when the wireless transceiver 32 is removed, the vehicle 30 becomes a normal vehicle that is not controlled by remote control and travels by a manned operation on the vehicle 30 or an unmanned operation. In addition, instead of the memories 302, the radio transceiver 32 may include a remote-controlled programming Pr2.

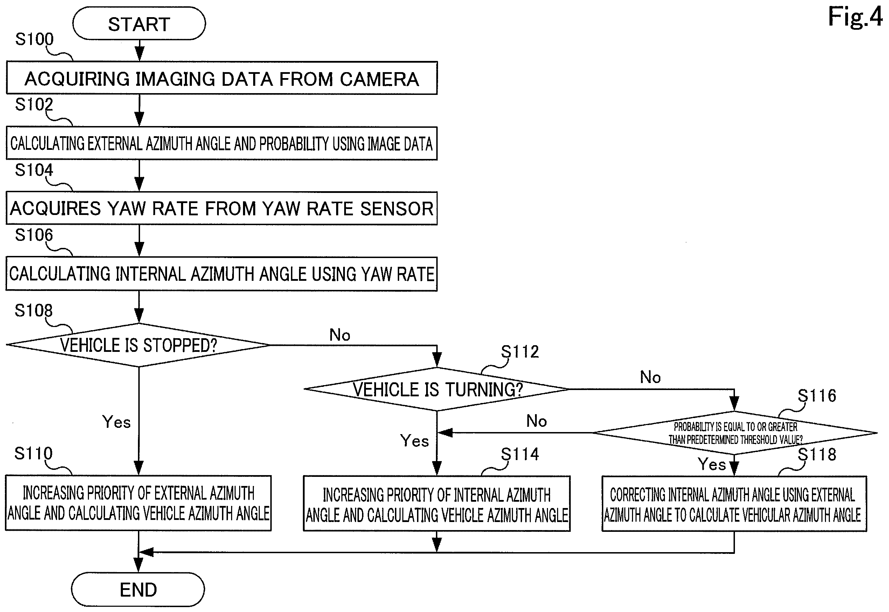

Referring to FIGS. 4 and 5, an azimuth angle acquisition process of a vehicle executed by the vehicle azimuth angle acquisition apparatus 10 according to the present embodiment will be described. The processing routine illustrated in FIG. 4 is repeatedly executed at predetermined time intervals, for example, every few milliseconds to several seconds. CPU101 executes the vehicle azimuth angle obtaining program Pr1 to obtain the vehicle azimuth angle as the azimuth angle calculator and the azimuth angle determinator. FIG. 5 shows the positional relation between the vehicle 30 and the external state detector 21, and shows, as a transition of the running state of the vehicle, a transition in Po3 where the vehicle 30 is in the straight-ahead state Po1, the vehicle 30 is in the turning state Po2, and the vehicle 30 is in the straight-ahead state.

CPU101 acquires image data from the external state detector 21, that is, the camera 21 via the input/output interface 103 (step S100). It is preferable that the image data acquired from the camera 21 is, for example, a moving image composed of a plurality of frame images captured at a frame rate within a 30fps~ 60fps. Alternatively, the imaging information may be a still image captured, for example, in units of 1s. When the displacement of the vehicle 30, for example, the moving speed or the turning speed is low, the imaging information may be a still image. CPU101 calculates the external azimuth angle and the probability of the external state detector 21 using the image data (step S102). Specifically, CPU101 calculates a motion vector relating to a predetermined feature point (point of interest) of the vehicle 30 using a plurality of frame images, and calculates an azimuth angle indicated by the calculated motion vector as an external azimuth angle. The predetermined feature of the vehicle 30 may be, for example, a center of gravity point of a plurality of feature point groups defining a region representing the vehicle 30 or a region extracted as a region representing the vehicle 30, or may be a portion where a change in luminance value in the vehicle 30 is large, for example, an edge portion on the rear side of the vehicle. Since an image processing technique for calculating/extracting a movement vector using a plurality of frame images is a known technique, a description thereof will be omitted. When calculating the external azimuth angle, a rectangular area representing the vehicle 30 may be extracted from each frame image by pattern matching, the azimuth angle in the main direction, which is the longitudinal direction of the extracted rectangular region, may be specified, and the azimuth angle in the specified main direction may be acquired as the external azimuth angle. In the calculation of the external azimuth angle, the position coordinates of the vehicle 30 can also be specified.

The external state detector 21, that is, the probability of the external azimuth angle can be calculated, for example, in the following manner.
- A pattern matching process is performed on some or all of the frame images acquired from the cameras 21 using a Al, and the similarity (matching degree) between the model of the vehicle 30 and the vehicle included in the frame image is scored. It is assumed that the probability is large when the obtained similarity is high, and the probability is small when the obtained similarity is low. The pattern matching process using AI is performed using a machine learning model. The machine learning model, for example, may be performed learning with a supervised/unsupervised learning or reinforcement learning in which vehicles are extracted from images by pattern matching. As the machine learning model, for example, a neural network or a support vector machine (SVM) may be used. Deep learning may be used when learning the reinforcement learning model.
- Image processing is performed on some or all of the frame images acquired from the camera 21, and image quality parameters such as brightness and sharpness are calculated. The brightness can be calculated, for example, as an average pixel value obtained by calculating a pixel value (luminance value) for each pixel forming a frame image and dividing the pixel value by the total number of pixels. When the brightness is high (bright), the probability may be high, and when the brightness is low (dark), the probability may be low. This is because, when the brightness is high, the range of the pixel value becomes wide, so that the luminance difference in the contour indicating the vehicle body becomes large, and the vehicle body can be accurately determined/extracted. Further, the sharpness can be calculated, for example, as a ratio of high-frequency components in a spectral distribution obtained by performing a fast Fourier transform on a frame image. When the sharpness is high, the probability may be high, and when the sharpness is low, the probability may be low. This is because, when the sharpness is high, the contour indicating the vehicle body in the frame image is clear, and the vehicle body can be accurately determined/extracted. When the above-described image quality parameter is used, a value obtained by normalizing the value of the image quality parameter with a range width that the image quality parameter can be taken may be used as a value indicating the probability.
- As an external environmental condition of the vehicle 30, for example, time of day or weather may be used. The time can be used as an index of the brightness of the external environment, and the probability is set high for the time between the morning and the evening in which sufficient brightness is expected, and the probability is set low for the other time. The weather obtained by the weather information is used as an index indicating the brightness of the external environment, and can be used as an index of the clearness of the frame image affected by the yellow sand and the fog. If yellow sand or fog is expected due to weather information, the probability is set low.
- As an external environmental condition of the vehicle 30, for example, as illustrated in FIG. 5, a positional relationship between the external state detector 21 and the vehicle 30 can be used. When the vehicle 30 is close to the installed position of the external state detector 21, imaging of the vehicle 30 with an appropriate angle of view is expected, and since more pixels in the frame image indicate the vehicle area, the vehicle 30 can be represented with a higher resolution. As the vehicle 30 approaches the installed position of the external state detector 21, the probability is set to higher. The distance between the vehicle 30 and the external state detector 21 or the normalized distance is obtained as a value indicating the probability. As a result, it is possible to accurately determine/extract the vehicle body from the frame image. The installed position of the external state detector 21 is known, and the position information of the vehicle 30 with respect to the external state detector 21 may be obtained as the distance of the vehicle 30 with respect to the external state detector 21 that has been measured using Lidar or the radar. Alternatively, the positional relationship between the external state detector 21 and the vehicle 30 may be obtained by using the positional coordinates of the vehicle 30, which are determined by GNSS (Global Satellite Positioning System) provided in the vehicle 30 and the positional coordinates of the external state detector 21.

The above various probabilities may be used only one, or may be used as a combination of any aspects. In the combination, the certainty in each aspect may be simply added, or a predetermined weight/coefficient may be applied and added, and a normalization process in which the maximum value is 1 and the minimum value is 0 may be performed. In addition, the calculated probability may be stored in the probability storage area 102a in the memories 102 in order to repeatedly use the calculated probability for the plurality of vehicles 30.

CPU101 acquires the yaw rate from the yaw rate sensor 31 (step S104). CPU101 uses the acquired yaw rate to calculate the internal azimuth angle (step S106). As is well known, the calculation of the azimuth angle of the vehicle using the yaw rate is performed by an integration operation using the yaw rate obtained before this time. CPU101 determines whether the vehicle 30 is stopped (step s108, Po1 in FIG. 5). Specifically, the vehicle speed transmitted from the vehicle 30 and included in the received travel information is used. When CPU101 determines that the vehicle 30 is stopped, that is, when it is determined that the vehicle speed is 0km/h (step S108:Yes), increases the priority/priority level of the external azimuth angle, calculates the vehicle azimuth angle of the vehicle 30 (step S110), and then ends this process. The vehicle azimuth angle is an azimuth angle used in the self-propulsion control of the vehicle 30. For example, the vehicle azimuth angle may be calculated with the weighted average as the vehicle azimuth angle = (wi × internal azimuth angle+ wo × external azimuth angle)/2. As a mode in which the priority of the external azimuth angle is increased, i.e., set to be high, in addition to a mode in which only the external azimuth angle is used (wi=0,Wo=1: total weight=1), a weighting of 0<wi<0.2 for the internal azimuth angle may be set, and a weighting of wo=1-wi for the external azimuth angle may be set. In general, since the internal azimuth angle is calculated by an integration calculation, a previous value/an initial value is required. On the other hand, for example, in a case where the vehicle 30 is stopped after the straight running in the middle of the running of the vehicle 30, the previous internal azimuth angle obtained immediately before the vehicle 30 is stopped can be used.

When determining that the vehicle 30 is not in the stopped state, that is, when determining that the vehicle speed #0km/h (step S108:No), CPU101 determines whether the vehicle 30 is in the turning state (step S112, Po2 in FIG. 5). For example, a turning angle that is transmitted from the vehicle 30 and included in the received travel information is used to determine whether the vehicle 30 is in the turning state. In the present embodiment, the operation angle of the steered wheels by a handle wheel operation of the vehicle 30 is defined as the steering angle, and the actual turning angle of the steered wheels is defined as the steering angle. In a case where the vehicle 30 does not have a sensor for detecting the turning angle, the steering angle detected and transmitted by the vehicle 30 may be used. When the obtained turning angle or steering angle is equal to or greater than a determination turning angle or the determined steering angle for a predetermined period of time, CPU101 determines that the vehicle 30 is in the turning state. The predetermined time is, for example, 2 to 5 seconds to eliminate a temporary handle wheel operation without turning. The determined turning angle or the determined steering angle is, for example, 2 to 5 degrees in order to eliminate the steering angle adjustment for the straight-ahead holding. Whether the vehicle 30 is in the turning state may be determined using the output of the yaw rate sensor 31. That is, it may be determined whether a rotational moment around the yaw axis of the vehicle 30 equal to a predetermined determination value or more is generated for a predetermined time.

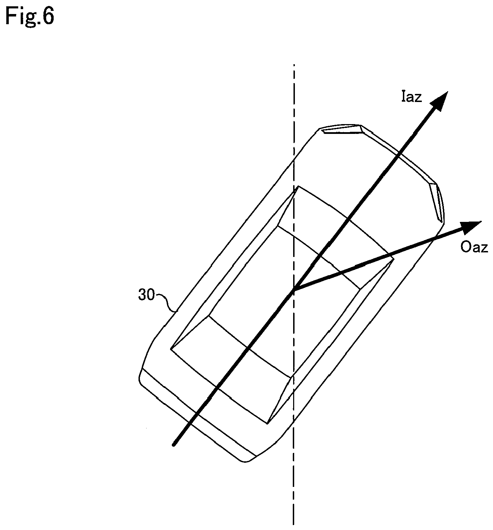

When CPU101 determines that the vehicle 30 is in the turning condition (step S112:Yes), CPU 101 increase the priority of the internal azimuth angle, calculates the vehicle azimuth angle of the vehicle 30 (step S114), and ends this process routine. As a mode in which the priority of the internal azimuth angle is increased, i.e., set to be high, in addition to a mode in which only the internal azimuth angle is used (wi=1 ,Wo=0: total weight=1), a weighting of 0<wo<0.2 with respect to the external azimuth angle may be set, and a weighting wi=1-wo with respect to the internal azimuth angle may be set. In the present embodiment, a motion vector is used to calculate the external azimuth angle. As illustrated in FIG. 6, a motion vector Oaz indicates the motion of the feature point of the vehicle 30, and is a physical quantity that differs from the azimuth angle laz of the vehicle 30. In particular, when the vehicle 30 is in the turning condition, the motion vector Oaz and the azimuth angle laz tend to deviate from each other. In addition, generally, a smoothing filter such as a low-pass filter is applied to improve S/N ratio of a signal indicating the motion vector Oaz, and there is a possibility that a deviation from a true value occurs more remarkably due to a phase delay in the turning state in which the azimuth angle is largely displaced. On the other hand, the motion vector Oaz is useful as a parameter for estimating whether the vehicle 30 is in the straight-ahead state or the turning state. Further, the calculated internal azimuth angle has a characteristic that an integration error caused by the integration of the sensor tolerance occurs. Therefore, the vehicle azimuth angle in which the integration error is reduced can be obtained by considering the external azimuth angle. Further, in the case where the external azimuth angle of the vehicle 30 is specified by the pattern matching process for each frame image, the vehicle azimuth angle with improved accuracy can be obtained by adding the external azimuth angle since the external azimuth angle becomes the same physical quantity as the internal azimuth angle.

When CPU101 determines that the vehicle 30 is not in the turning state (step S112:No: Po1, Po3 in FIG. 5), CPU 101 determines whether the probability of the external azimuth angle is equal to or greater than a predetermined threshold value (step S116). The probability may take on various forms of values as described above. As the predetermined threshold value, in the following Step S118, a threshold value capable of determining that the external azimuth angle is suitable for correcting the internal azimuth angle is used. For example, thresholds value may be used that result in a probability of greater than 70%, preferably greater than 80%, and more preferably greater than 90% of any form of probability.

If it is determined that the probability of the external azimuth angle is equal to or greater than the predetermined threshold value (step S116:Yes), CPU101 corrects the internal azimuth angle using the external azimuth angle to calculate the vehicular azimuth angle (step S118), and ends this process routine. That is, when the running state of the vehicle 30 is in a straight-ahead state in which the external azimuth angle can indicate the vehicle azimuth angle, and the probability of the external azimuth angle is equal to or greater than a predetermined threshold value, the internal azimuth angle is corrected. Correction of the internal azimuth angle using the external azimuth angle is performed at a timing at which the distance between the vehicle 30 and the external state detector 21 is short, that is, at a timing at which the external state detector 21 that detects the vehicle 30 is switched. This is because, as described above, the probability of the external azimuth angle is high at this timing. Examples of the correction include a mode in which an internal azimuth angle is replaced with an external azimuth angle at a single timing, and a mode in which a moving average filtering process is applied to a plurality of sampling times of an external azimuth angle, for example, 10 calculation values to gradually replace the internal azimuth angle. Incidentally, a smoother correction can be realized by increasing the number of calculated values of the application of the moving average filter, but a suitable smoother correction can be realized with a sampling number of about 10 to 20 times. Further, as a specific method of the substitution, the internal azimuth angle may be substituted by a weighted average value of the internal azimuth angle and the external azimuth angle. As the weighting value, for example, for the external azimuth angle the weighting value of 70 to 100% may be used, for the internal azimuth angle a value obtained by subtracting the weighting value for the external azimuth angle from 100% may be used.

When it is determined that the probability of the external azimuth angle is not equal to or greater than the predetermined threshold value (step S116:No), CPU101 does not correct the internal azimuth angle using the external azimuth angle, and proceeds to step S114 to end this process routine. This is because, when the probability of the external azimuth angle is low, correction of the internal azimuth angle using the external azimuth angle may be erroneous correction of the internal azimuth angle.

According to the vehicle azimuth angle acquisition apparatus 10 of the first embodiment described above, the external azimuth angle is calculated using the external state that is the motion state of the vehicle 30 detected from the external world, the internal azimuth angle is calculated using the internal state that is the motion state of the vehicle 30 detected from the internal world, and the vehicle azimuth angle used to self-propel the vehicle 30 is determined using the calculated external azimuth angle and the internal azimuth angle. Therefore, it is possible to improve the accuracy of obtaining the azimuth angle of the self-propelled vehicle.

In general, an external azimuth angle, which is an azimuth angle obtained by image processing on the frame image, may be obtained directly as an absolute value. On the other hand, a signal indicating an azimuth angle or a motion vector Oaz has a low S/N rate, and a smoothing process is performed on the signal by applying a low-pass filter or the like. Therefore, in the straight-ahead state in which the displacement of the azimuth angle of the vehicle 30 is small, the error caused by the phase delay associated with the signal processing is small and can be used as the vehicle azimuth angle. On the other hand, in the turning state in which the displacement of the azimuth angle of the vehicle 30 is large, the error of the external azimuth angle with the vehicle azimuth angle at the current position of the vehicle 30 becomes large due to the phase delay, and the vehicle azimuth angle of the vehicle 30 cannot be accurately indicated. When the motion vector Oaz is used as the external azimuth angle, it is different from the vehicle azimuth angle as the physical quantity.

On the other hand, the internal azimuth angle, which is an azimuth angle acquired by the yaw rate sensor 31 mounted on the vehicle 30, has a property of having a higher S/N ratio. On the contrary, when the internal state detector 31 such as a yaw rate sensor is used, the azimuth angle has a characteristic that the tolerance is also integrated and deviates from the true value because the azimuth angle is calculated by the integration of the detection values.

Since the vehicle azimuth angle acquiring apparatus 10 according to the first embodiment calculates the vehicle azimuth angle according to the characteristics of the external azimuth angle and the internal azimuth angle, the deviation from the true value can be reduced as compared with the case where the external azimuth angle and the internal azimuth angle or simply the combination of the external azimuth angle and the internal azimuth angle are used, and the vehicle azimuth angle can be acquired with a good S/N ratio. That is, when the vehicle 30 is in the stopped state, the vehicle azimuth angle is acquired by making the priority of the external azimuth angle higher than the priority of the internal azimuth angle. When the vehicle 30 is in the turning state, or when the vehicle 30 is in the straight-ahead state and the probability of the external azimuth angle is low, the priority of the internal azimuth angle is set higher than the priority of the external azimuth angle to obtain the vehicle azimuth angle, and when the vehicle 30 is in the straight-ahead state and the probability of the external azimuth angle is high, correction using the external azimuth angle is performed to calibrate the cumulative error of the internal azimuth angle. When the external azimuth angle and the internal azimuth angle are combined, an Al, that is, a learning-model may be used. By using the learning model, and by continuing the learning of the learning model, it is possible to realize a combination priority of a more appropriate external azimuth angle and an internal azimuth angle according to each running state of the vehicle.

According to the vehicle azimuth angle acquisition apparatus 10 according to the first embodiment, since it is possible to acquire a highly accurate vehicle azimuth angle, it is possible to accurately control the position of the vehicle in the self-propulsion control of the vehicle 30 executed using the vehicle azimuth angle. As a result, it is possible to improve the accuracy of the stop position of the vehicle 30 at the final destination of the vehicle 30.

The various advantages described above can be similarly obtained in the vehicle azimuth angle acquisition system 100 and the vehicle azimuth angle acquisition method according to the present embodiment.

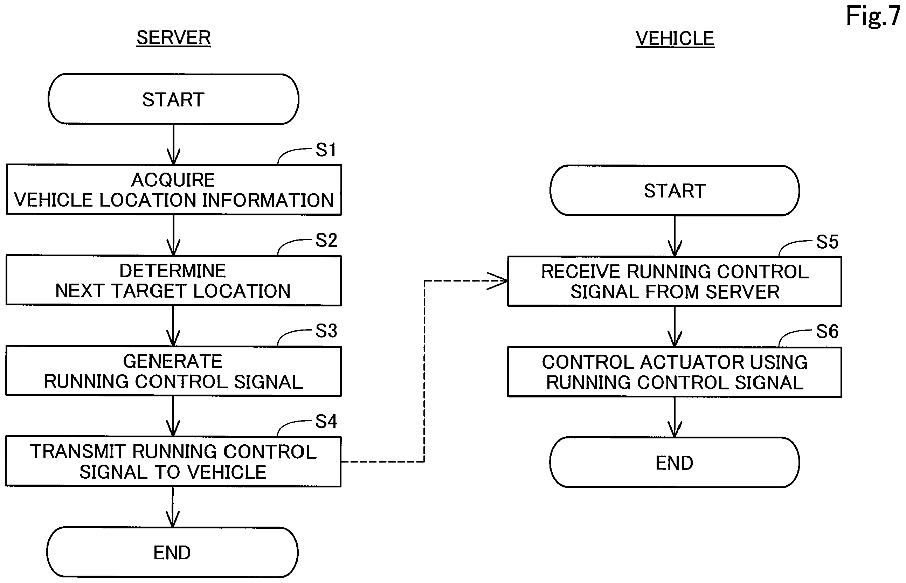

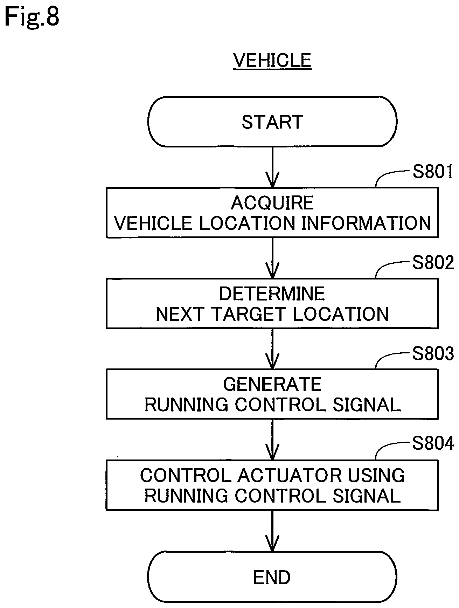

Other embodiments:
(1)The vehicle azimuth angle acquisition apparatus 10 according to the first embodiment changes the priorities of the internal azimuth angle and the external azimuth angle when calculating the vehicle azimuth angle according to the running state of the vehicle. On the other hand, the vehicle azimuth angle acquiring apparatus 10 may change the priorities of the internal azimuth angle and the external azimuth angle in accordance with the state of the external state detector 21 disposed on the route Rt on which the vehicle 30 travels. For example, in FIG. 5, the arrangement density/arrangement frequency of the external state detectors 21 around the vehicle in the straight-ahead state PC is higher than the arrangement density/arrangement frequency of the external state detectors 21 around the vehicle in the straight-ahead state Po3. In this case, since it is possible to use an external azimuth angle having a large probability, the priority of the external azimuth angle may be set higher than the priority of the internal azimuth angle. In particular, when the vehicle 30 is in the straight-ahead condition, the motion vector Oaz and the azimuth angle of the vehicle can be treated as substantially the same physical quantity, and the accuracy of the vehicle azimuth angle can be obtained without using the internal azimuth angle by using the external azimuth angle as the absolute value because the probability is high/large.
(2)ln the first embodiment, the vehicle azimuth angle acquisition apparatus 10 is described as a server computer having a function of acquiring the vehicle azimuth angle acquisition. The server computer may also function as a remote control apparatus for remotely controlling the vehicle 30 with a remote control program for causing the vehicle 30 to self-propel. This will be described with referring Fig. 7. In order to realize the remote control, the server computer acquires vehicle location information (Step S1). More specifically, the server computer acquires vehicle information indicating the running state from the vehicle 30, calculates the internal azimuth angle, and acquires the external state from the external state detectors 21, calculates the external azimuth angle. The server computer acquires the position coordinates and the vehicle azimuth angle acquired with using the internal azimuth angle and the external azimuth angle as the vehicle location information. The position coordinates, for example, will be acquired by determining the outer shape of the vehicle 30 from the captured image, calculating the coordinates of a positioning point of the vehicle 30 in a coordinate system of the captured image, namely, in a local coordinate system, and converting the calculated coordinates to coordinates in the global coordinate system. The outer shape of the vehicle 30 in the captured image may be detected by inputting the captured image to a detection model using artificial intelligence, for example. The detection model is prepared in the system or outside the system. The detection model is stored in advance in a memory of the server, for example. An example of the detection model is a learned machine learning model that was learned so as to realize either semantic segmentation or instance segmentation. For example, a convolution neural network (CNN) learned through supervised learning using a learning dataset is applicable as this machine learning model. The learning dataset contains a plurality of training images including the vehicle 30, and a label showing whether each region in the training image is a region indicating the vehicle 30 or a region indicating a subject other than the vehicle 30, for example. In training the CNN, a parameter for the CNN is preferably updated through backpropagation in such a manner as to reduce error between output result obtained by the detection model and the label. The server computer can acquire the orientation of the vehicle 30 through estimation based on the direction of a motion vector of the vehicle 30 detected from change in location of a feature point of the vehicle 30 between frames of the captured images using optical flow process, for example. The server computer determines a target location to which the vehicle 30 is to move next (Step S2). The target location is expressed by X, Y, and Z coordinates in the global coordinate system. The memory of the server computer contains a reference route stored in advance as a route along which the vehicle 30 is to run. The route is expressed by a node indicating a departure place, a node indicating a way point, a node indicating a destination, and a link connecting nodes to each other. The server computer determines the target location to which the vehicle 30 is to move next using the vehicle location information and the reference route. The server computer determines the target location on the reference route ahead of a current location of the vehicle 30. The server computer generates a running control signal for controlling the self-running of the vehicle 30 using the acquired vehicle location information and the vehicle information (Step S3). The running control signal includes an acceleration and a steering angle of the vehicle 30 as parameters. The server computer calculates a running speed of the vehicle 30 from transition of the location of the vehicle 30 and makes comparison between the calculated running speed and a target speed of the vehicle 30 determined in advance. If the running speed is lower than the target speed, the server computer generally determines an acceleration in such a manner as to accelerate the vehicle 30. If the running speed is higher than the target speed as, the server computer generally determines an acceleration in such a manner as to decelerate the vehicle 30. If the vehicle 30 is on the reference route, server 200 determines a steering angle and an acceleration in such a manner as to prevent the vehicle 30 from deviating from the reference route. If the vehicle 30 is not on the reference route, in other words, if the vehicle 30 deviates from the reference route, the server 30 determines a steering angle and an acceleration in such a manner as to return the vehicle 30 to the reference route. In other embodiments, the running control signal may include the speed of the vehicle 30 as a parameter instead of or in addition to the acceleration of the vehicle 30. The server computer transmits the generated running control signal to the vehicle 30 (Step S4). The server computer repeats the acquisition of vehicle location information, the determination of a target location, the generation of a running control signal, the transmission of the running control signal, and others in a predetermined cycle. The vehicle 30 receives the running control signal (Step S5). The vehicle 30, in response to the running control signal adjusts the output of a driving source and adjusts the braking amount of the braking apparatus to realize the acceleration, and adjusts the steering angle of the steering device to realize self-propulsion of the vehicle 30 (Step S6). The vehicle 30 repeats the reception of a running control signal and the control over the actuator such as the driving source, breaking apparatus and steering device in a predetermined cycle. According to the system in the present embodiment, it becomes possible to move the vehicle 30 without using a transport unit such as a crane or a conveyor. The capturing of the vehicle 30 at the time of remote control can be performed, for example, by capturing a predetermined end point in the frame image acquired by the external state detector 21 as a point of interest. Therefore, the vehicle 30 is captured by the vehicle azimuth angle acquisition apparatus 10 at a timing at which the external azimuth angle and the position coordinates of the target vehicle 30 are acquired. That is, the acquisition of the vehicle azimuth angle in the first embodiment may be performed as part of a processing routine of remote control for the vehicle 30. By using the vehicle azimuth angle acquired by the vehicle azimuth angle acquisition apparatus 10 according to the first embodiment, it is possible to improve the accuracy of remote control of the vehicle 30. The accuracy of the remote control includes a positional deviation with respect to a route from the departure point to the target point and a deviation with respect to an arrival position at the target point.
(3)In the first embodiment, a control mode of the self-propellable vehicle 30 using the vehicle azimuth angle acquired by the vehicle azimuth angle acquisition apparatus 10 is not described. A mode to which the vehicle azimuth angle acquisition apparatus 10 according to the first embodiment may be applied includes a mode that the vehicle 30 is transported by self-propel of the vehicle 30 without a separated transport unit in a factory for manufacturing the vehicle 30 and a mode by unmanned driving of the vehicle 30 in a yard for keeping a completed vehicle. More specifically, the factory includes aspects such as the movement of the vehicle 30 between the manufacturing processes without a belt-conveyor or the separated transport unit, the movement of the vehicle to the yard after the completion of the vehicle, and the movement of the vehicle between the yard and vehicle transportation ships and trains. In each of these movements, the vehicle 30 travels by self-propulsion control. By improving the accuracy of acquiring the vehicle azimuth angle when the vehicle 30 is self-propelled, it is possible to realize the stop position of the vehicle 30 for the final purpose with desired accuracy.
(4)In the first embodiment, the vehicle 30 may be provided with a configuration that can be moved by remote control, and may be, for example, in the form of a platform including a configuration described below. Specifically, the vehicle 30 may include, at a minimum, a vehicle control, a drive unit, a steering device, a braking device and a wireless transceiver 32 in order to perform the three functions of "driving," "turning," and "stopping" by remote control. That is, in the vehicle 30 that can be moved by remote control, at least a part of an interior component such as a driver's seat or a dashboard may not be mounted, at least a part of an exterior component such as a bumper or a fender may not be mounted, and a body shell may not be mounted. In this case, the remaining components such as the body shell may be mounted on the vehicle 30 until the vehicle 30 is shipped from the factory, or the remaining components such as the body shell may be mounted on the vehicle 30 after the vehicle 30 is shipped from the factory in a state where the remaining components such as the body shell are not mounted on the vehicle 30. In addition, for the form of the platform, a position determination can be made in which a predetermined end point is captured as a point of interest in the same manner as in the vehicle 30.
(5)In the first embodiment, the vehicle azimuth angle acquisition apparatus 10 that determines the vehicle azimuth angle used for the self-propelled driving of the vehicle 30 using the external azimuth angle and the internal azimuth angle by executing the vehicle azimuth angle acquisition program Pr1 by CPU101 is implemented, but may be implemented in hardware by a pre-programmed integrated circuit or a discrete circuit. That is, the control unit and the method thereof in each of the above-described embodiments may be realized by a dedicated computer provided by configuring a processor and a memory programmed to execute one or more functions embodied by a computer program. Alternatively, the control unit and the technique described in the present disclosure may be realized by a dedicated computer provided by configuring a processor by one or more dedicated hardware logic circuits. Alternatively, the control unit and the technique described in the present disclosure may be realized by one or more dedicated computers configured by a processor programmed to execute one or more functions and a combination of a memory and a processor configured by one or more hardware logic circuits. In addition, the computer program may be stored in a non-transitory computer-readable tangible recording medium as an instruction executed by a computer.
(6) The vehicle 30 in the above embodiments is configured to be capable of running by unmanned driving. The "unmanned driving" means driving independent of running operation by a passenger. The running operation means operation relating to at least one of "run," "turn," and "stop" of the vehicle 30. The unmanned driving is realized by automatic remote control or manual remote control using a device provided outside the vehicle 30 or by autonomous control by the vehicle 30. A passenger not involved in running operation may be on-board a vehicle running by the unmanned driving. The passenger not involved in running operation includes a person simply sitting in a seat of the vehicle 30 and a person doing work such as assembly, inspection, or operation of switches different from running operation while on-board the vehicle 30. Driving by running operation by a passenger may also be called "manned driving."
(7) In the present specification, the "remote control" includes "complete remote control" by which all motions of the vehicle 30 are completely determined from outside the vehicle 30, and "partial remote control" by which some of the motions of the vehicle 30 are determined from outside the vehicle 30. The "autonomous control" includes "partial autonomous control" by which the vehicle 30 controls a motion of the vehicle 30 autonomously using information received from a device outside the vehicle 30. In the above-described other embodiments (2). (3) , the vehicle azimuth angle acquisition apparatus 10 as the server computer acquires the vehicle azimuth angle and performs the processing from acquisition of vehicle location information including the vehicle azimuth angle to generation of a running control signal. By contrast, the vehicle 30 may perform at least part of the processing from acquisition of vehicle location information to generation of a running control signal. For example, embodiments (7a) and (7b) described below are applicable, for example. In the following explanation, the vehicle azimuth angle acquisition apparatus 10 as the server.
(7a) The server may acquire vehicle location information, determine a target location to which the vehicle 30 is to move next, and generate a route from a current location of the vehicle 30 indicated by the acquired vehicle location information to the target location. The server may generate a route to the target location between the current location and a destination or generate a route to the destination. The server may transmit the generated route to the vehicle 30. The vehicle 30 may generate a running control signal in such a manner as to cause the vehicle 30 to run along the route received from the server and control an actuator using the generated running control signal.
(7b) The server may acquire vehicle location information and transmit the acquired vehicle location information to the vehicle 30. As shown in Fig. 8, the vehicle 30 may acquire the vehicle location information (Step S801), determine a target location to which the vehicle 30 is to move next (Step S802), generate a route from a current location of the vehicle 30 indicated by the received vehicle location information to the target location, generate a running control signal in such a manner as to cause the vehicle 30 to run along the generated route (Step S803), and control an actuator using the generated running control signal (Step S804).
(8) In each of the above-described embodiments, the vehicle 30 is simply required to have a configuration to become movable by unmanned driving. The vehicle 30 may embodied as a platform having the following configuration, for example. The vehicle 30 is simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 30. In order for the vehicle 30 to acquire information from outside for unmanned driving, the vehicle 30 is simply required to include the communication device further. Specifically, the vehicle 30 to become movable by unmanned driving is not required to be equipped with at least some of interior components such as a driver' s seat and a dashboard, is not required to be equipped with at least some of exterior components such as a bumper and a fender or is not required to be equipped with a bodyshell. In such cases, a remaining component such as a bodyshell may be mounted on the vehicle 30 before the vehicle 30 is shipped from a factory, or a remaining component such as a bodyshell may be mounted on the vehicle 30 after the vehicle 30 is shipped from a factory while the remaining component such as a bodyshell is not mounted on the vehicle 30. Each of components may be mounted on the vehicle 30 from any direction such as from above, from below, from the front, from the back, from the right, or from the left. Alternatively, these components may be mounted from the same direction or from respective different directions. The location determination for the platform may be performed in the same way as for the vehicle 30 in the first embodiments.
(9) The vehicle 30 may be manufactured by combining a plurality of modules. The module means a unit composed of one or more components grouped according to a configuration or function of the vehicle 30. For example, a platform of the vehicle 30 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 30 different from the platform may be modularized. Various modules may include an arbitrary exterior component such as a bumper or a grill, or an arbitrary interior component such as a seat or a console. Not only the vehicle 30 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.
(10) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

While the present disclosure has been described based on the embodiments and modifications, the embodiments of the invention described above are intended to facilitate understanding of the present disclosure and are not intended to limit the present disclosure. The present disclosure can be modified and improved without departing from the spirit and scope of the claims, and equivalents thereof are included in the present disclosure. For example, the embodiments corresponding to the technical features in the respective embodiments described in the Summary and the technical features in the modification can be appropriately replaced or combined in order to solve some or all of the above-described problems or to achieve some or all of the above-described effects. In addition, if the technical features are not described as essential in the present specification, they can be deleted as appropriate.

## Claims

1. An azimuth angle acquisition apparatus (10) for a self-propellable vehicle (30), comprising:
an acquirer (101) configured to acquire an external state and an internal state, wherein the external state is a motion state of the vehicle detected from an external world, and the internal state is the motion state of the vehicle detected from an internal world;
an azimuth angle calculator (101) configured to calculate an external azimuth angle using the acquired external state and calculate an internal azimuth angle using the acquired internal state; and
an azimuth angle determinator (101) configured to determine a vehicle azimuth angle with using the calculated external azimuth angle and the internal azimuth angle, wherein the vehicle azimuth angle is used to self-propel the vehicle.

2. The azimuth angle acquisition apparatus according to claim 1,
wherein the azimuth angle determinator determines the vehicle azimuth angle by changing a priority level of the external azimuth angle and a priority level of the internal azimuth angle according to the motion state of the vehicle and a state of an external state detector, wherein the external state detector detects the external state.

3. The azimuth angle acquisition apparatus according to claim 2,
wherein the azimuth angle determinator increases the priority level of the external azimuth angle and determines the vehicle azimuth angle when the motion state of the vehicle is in a stopped state.

4. The azimuth angle acquisition apparatus according to claim 2,
wherein the azimuth angle determinator increases the priority level of the internal azimuth angle and determines the vehicle azimuth angle when the motion state of the vehicle is in a turning state.

5. The azimuth angle acquisition apparatus according to claim 2,
wherein the azimuth angle determinator corrects the internal azimuth angle using the external azimuth angle when the motion state of the vehicle is in a straight-ahead state and the probability of the external state detector is equal to or larger than a predetermined threshold value, and increases the priority level of the internal azimuth angle and determines the vehicle azimuth angle when the probability of the external state detector is less than the predetermined threshold value.

6. The azimuth angle acquisition apparatus according to claim 2,
wherein the external state detector is an imaging device (21) disposed in the external world of the vehicle,
wherein the azimuth angle calculator calculates the external azimuth angle of the vehicle using an image captured by the imaging device.

7. The azimuth angle acquisition apparatus according to claim 2,
wherein the internal state is detected by an internal state detector (31), the internal state detector is a yaw rate sensor provided in the vehicle,
wherein the azimuth angle calculator calculates the internal azimuth angle of the vehicle using a yaw rate acquired by the yaw rate sensor.

8. An azimuth angle acquisition system (500) for a self-propellable vehicle (30), comprising:
an external state detector (21) disposed in an external world of the vehicle to detect a motion state of the vehicle from the external world;
an internal state detector (31) mounted on the vehicle to detect the motion state of the vehicle from an internal world;
an azimuth angle acquisition apparatus (10), the azimuth angle acquisition apparatus comprising:
an azimuth angle calculator (101) configured to calculate an external azimuth angle using an external state of the vehicle and an internal azimuth angle using an internal state of the vehicle, wherein the external state is the motion station of the vehicle detected by the external state detector, and the internal state is the motion station of the vehicle detected by the internal state detector, and
an azimuth angle determinator (101) configured to determine a vehicle azimuth angle with using the calculated external azimuth angle and the internal azimuth angle, wherein the vehicle azimuth angle is used to self-propel the vehicle.

9. A method of acquiring an azimuth angle of a self-propellable vehicle, comprising:
acquiring an external state and an internal state, wherein the external state is a motion state of the vehicle detected from an external world and the internal state the motion state of the vehicle detected from an internal world;
calculating an external azimuth angle using the acquired external state, and an internal azimuth angle using the acquired internal state; and
determining a vehicle azimuth angle using the calculated external azimuth angle and the internal azimuth angle, wherein the vehicle azimuth angle is used to self-propel the vehicle.
